Europäisches Patentamt

**European Patent Office**

Office européen des brevets

(19)

(11) Numéro de publication: **0 165 159 B1**

(12) **FASCICULE DE BREVET EUROPEEN**

(45) Date de publication du fascicule du brevet:
**20.12.89**

(51) Int. Cl.⁴: **B 62 K 21/00**, B 62 D 1/12

(21) Numéro de dépôt: **85401041.0**

(22) Date de dépôt: **28.05.85**

(54) **Dispositif d'actionnement manuel en particulier pour une direction de motocycle.**

(30) Priorité: **14.06.84 FR 8409321**

(43) Date de publication de la demande:
**18.12.85 Bulletin 85/51**

(45) Mention de la délivrance du brevet:
**20.12.89 Bulletin 89/51**

(84) Etats contractants désignés:
**AT CH DE GB LI LU NL SE**

(56) Documents cités:
**DE-C- 73 774**
**FR-A- 846 679**
**FR-A- 1 480 952**

(73) Titulaire: **ELF FRANCE, 2 place de la Coupole La Défense 6, F-92400 Courbevoie (FR)**

(72) Inventeur: **De Cortanze, André, 49 Parc du Val d'Or, F-92210 St. Cloud (FR)**

(74) Mandataire: **Hirsch, Marc-Roger, Cabinet Hirsch 34 rue de Bassano, F-75008 Paris (FR)**

ACTORUM AG

# Description

La présente invention se rapporte à un dispositif d'actionnement manuel, par l'intermédiaire de deux poignées, de l'orientation de la roue directrice d'un motocycle obtenue en agissant sur une tige de direction.

Les véhicules tels que les motocycles comportent généralement un organe de direction appelé «guidon» et qui est constitué d'un tube transversal solidaire d'une tige de direction verticale reliée à la fourche de la roue avant du motocycle. Le tube transversal se termine, à chaque extrémité, par des poignées qui servent à l'orientation manuelle de la direction et sur lesquelles on peut fixer d'autres organes de commande du véhicule tels que les poignées de frein et de débrayage.

Cette disposition qui convient bien aux cycles et motocycles relativement lents se révèle, par contre, peu pratique et surtout peu ergonomique pour les motocycles rapides susceptibles de prendre des inclinaisons importantes en virage. Il apparaît pour cela avantageux de pouvoir incliner les poignées de direction dans le même sens que l'inclinaison du véhicule.

Le document FR-A-1 480 952 a proposé un dispositif d'actionnement manuel de deux tiges de direction agissant sur des roues directrices d'un véhicule par l'intermédiaire de deux leviers de manœuvre mobiles en rotation dans un plan sensiblement vertical et reliées chacune à un jeu de trois barres, la première barre de ces jeux formant avec chacune des poignées un levier articulé sur le véhicule, les troisièmes barres étant solidaires d'un axe de couplage transversal à l'axe longitudinal du véhicule et d'un second élément constitué par un bras de renvoi vers le bas solidaire en rotation de l'axe de couplage précité et relié aux deux tiges de direction, les deuxièmes barres étant articulées alternativement de façon croisée et de façon non croisée avec les deux autres barres des deux jeux de barres de telle façon que lorsqu'on déplace un levier de manœuvre dans une direction, l'autre levier de manœuvre tourne dans le sens opposé du même angle.

Ce dispositif de commande de direction à poignées rotatives dans des sens opposés est difficile à installer sous la forme d'un bloc de direction sur un motocycle où l'espace est limité entre les jambes du conducteur et le bloc moteur transmission. La présente invention a en conséquence pour but de résoudre le problème consistant à adapter à un motocycle une commande de direction à deux poignées rotatives dans des directions opposées, de telle manière qu'elle n'interfère pas avec la partie centrale du motocycle contenant le bloc moteur-transmission et, qu'à la différence d'une direction à guidon, elle libère complètement la partie centrale en avant du bloc moteur-transmission pour permettre d'y loger un radiateur de refroidissement de relativement grandes dimensions.

A cet effet, dans le dispositif d'actionnement manuel d'une tige de direction agissant sur la roue directrice d'un véhicule par l'intermédiaire de deux poignées mobiles en rotation dans un plan sensiblement vertical et reliées chacune à trois barres, la première barre de ces jeux formant avec chacune des poignées un levier articulé sur le véhicule, tandis que les troisièmes barres sont solidaires d'une part d'une barre de couplage susceptible de tourner autour de son axe longitudinal, transversal à l'axe longitudinal du véhicule, et d'autre part d'un second élément constitué par un bras de renvoi solidaire au moins en rotation de la barre de couplage précitée et relié à la tige de direction et que les deuxièmes barres sont pour l'une articulée de façon croisée avec les deux autres barres du jeu de barres correspondant et pour l'autre articulée de façon non croisée avec les deux autres barres de l'autre jeu de barres, le bras de renvoi et la troisième barre de l'un des jeux de barres formant un levier solidaire au moins en rotation de la barre de couplage rotatif, selon l'invention le véhicule est un motocycle et chacune des poignées est fixée respectivement du côté droit et du côté gauche de la partie supérieure du bloc moteur-transmission du motocycle pour former, avec les trois barres correspondantes, deux blocs-leviers reliés par la barre de couplage au-dessus du bloc moteur-transmission, tandis que le bras de renvoi est disposé sur le côté du bloc moteur-transmission et est relié en partie basse à la tige de direction, de manière à laisser libre l'espace en avant du bloc moteur-transmission pour y loger un radiateur de refroidissement.

Cette disposition permet vraiment de bénéficier de la situation aérodynamique favorable du refroidissement du radiateur qui est par exemple la conséquence de la réalisation de la suspension avant sans faire appel à une fourche, à l'aide d'au moins un bras latéral dégageant le centre du motocycle de toute interception aérodynamique autre que celle de la roue avant située à distance du bloc moteur-transmission, en particulier dans un motocycle de compétition possédant un empattement plus grand que la normale.

Dans le dispositif d'actionnement de direction selon l'invention appliqué à un véhicule tel qu'un motocycle susceptible de s'incliner en virage vers l'intérieur du virage, la liaison entre les deux poignées et la barre de couplage d'une part, et la liaison entre la tige de direction et un support de roue directrice d'autre part, sont réalisées de manière qu'en virage la poignée située du côté intérieur au virage soit amenée en position poussée vers l'avant du véhicule tandis que l'autre poignée est amenée en position tirée vers l'arrière, ou vice versa, selon l'effet ergonomique que l'on désire obtenir.

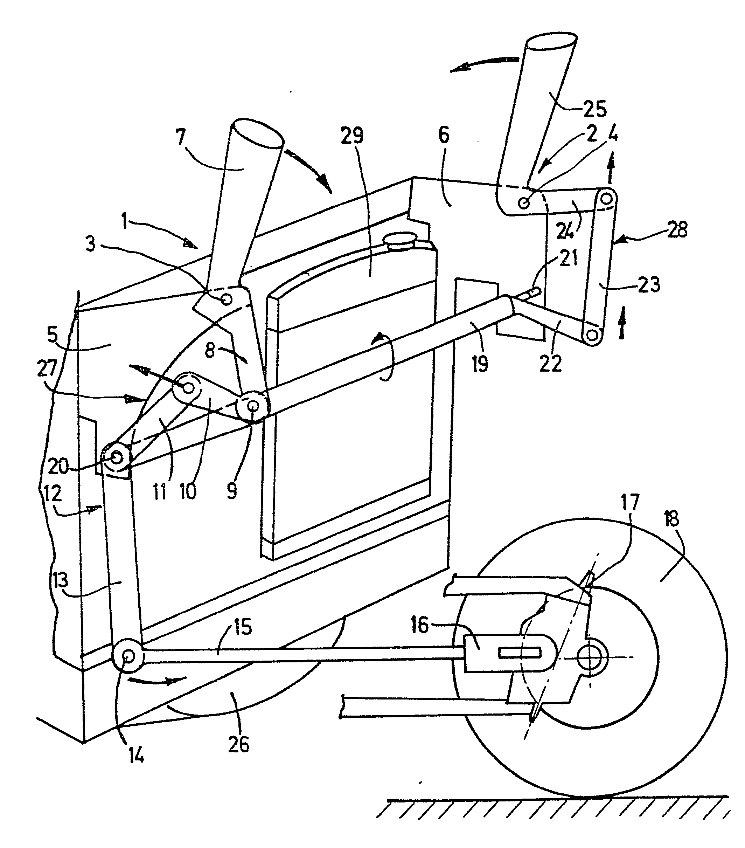

D'autres buts, avantages et caractéristiques de l'invention apparaîtront à la lecture de la description d'un mode de réalisation du dispositif selon l'invention, faite à titre non limitatif et en regard du dessin annexé où la figure unique est une vue en perspective schématique d'un dispositif d'actionnement manuel de direction de motocycle selon l'invention.

Le dispositif d'actionnement de direction représenté sur la figure se compose de deux leviers rotatifs 1 et 2 articulés en 3 et 4 sur des supports 5 et 6 du véhicule. Le levier 1 présente un bras supérieur sensiblement vertical formant poignée 7 et un bras inférieur formant première barre 8 disposée sensiblement dans l'alignement de la poignée 7. L'extrémité de la barre 8 opposée à l'articulation 3 est articulée par un axe 9 à une bielle ou deuxième barre 10 elle-même articulée à son extrémité à un bras court 11 d'un levier de renvoi 12 dont un bras long 13 dirigé vers le bras est articulé en 14 à son extrémité inférieure à une tige de direction 15 reliée au support 16 d'un pivot de direction 17 de la roue avant 18 du motocycle.

Le levier de renvoi 12 est relié rigidement par tout moyen tel que soudure ou emboîtement à une barre de couplage 19 montée rotative transversalement à l'axe longitudinal du véhicule et supportée par des paliers 20 et 21 des supports 5 et 6. Le bras court 11 formant troisième barre est ainsi rendu solidaire, au moins en rotation, de la barre de couplage rotative 19 qui est reliée au moins en rotation à une autre troisième barre 22 constituée par un bras rotatif solidaire de la barre de couplage 19.

La troisième barre 22 est reliée par une autre deuxième barre ou biellette 23 à une autre première barre 24 formant bras coudé pour le levier 2 qui présente un autre bras en forme de poignée 25 dirigée avec le haut. On remarque que la deuxième barre 10 du bloc levier associé au levier 1 est croisée avec la première barre 8 et avec la troisième barre 11, c'est-à-dire qu'elle ne referme pas les côtés d'un parallélogramme avec ces barres tandis que la deuxième barre 23 du bloc levier associée au levier 2 n'est pas croisée avec la première barre 24 et la troisième barre 22 avec lesquelles elle referme les côtés du parallélogramme. Cette disposition générale, due en partie au fait que la première barre 24 est un bras coudé du levier 2, fait que la rotation de la barre de couplage 19 provoque des rotations en sens inverse sur les poignées 7 et 25.

Le fonctionnement du dispositif d'actionnement de direction va maintenant être explicité. Le conducteur du motocycle tient fermement dans chaque main une poignée différente 7 ou 25 de la commande de direction et, pour orienter la roue avant directrice 18 du motocycle dans un virage à droite par exemple, il exerce soit une poussée sur la poignée 7, soit une traction sur la poignée 25, soit des couples de rotation simultanément inverses sur ces deux poignées, de manière à provoquer la rotation de la barre de couplage 19 et du levier de renvoi 12 dont le bras long 13 repousse alors vers la droite de la figure la tige de direction 15, ce qui fait tourner le support 16 et la roue 18 autour du pivot de direction 17. Ces sens de déplacement sont indiqués sur la figure par des flèches appliquées aux principaux points d'articulation.

Quelle que soit l'action exercée, la rotation de la roue directrice 18 sur son pivot 17 se traduit toujours par une rotation des poignées 7 et 25 en sens inverse, ce qui permet au pilote du motocycle d'occuper une meilleure position de commande de son véhicule au cours d'un virage. Pour faire tourner la roue directrice 18 en sens inverse, le conducteur du motocycle inverse les sens de rotation des poignées 7 et 25 qui restent mécaniquement couplées entre elles par la barre de couplage 19

On remarque sur la figure que chacune des poignées 7 ou 25 et leurs barres correspondantes peuvent être fixées respectivement sur les côtés droit et gauche de la partie supérieure d'un bloc moteur-transmission 26 par l'intermédiaire des supports 5 et 6 pour former, avec les trois barres correspondantes 8, 10, 11 ou respectivement 24, 23, 22, un bloc levier 27 ou 28. La barre de couplage 19 relie les deux blocs leviers 27 et 28 au-dessus du boc moteur-transmission 26 et le bras long 13 du levier de renvoi 12 est placé sur le côté du bloc moteur-transmission 26 pour être relié en partie basse en 14 à la tige de direction 15. Cette disposition libère ainsi la partie frontale du bloc moteur-transmission 26 et permet, par exemple, de loger aisément un radiateur de refroidissement 29 devant le bloc moteur-transmission en arrière de la roue avant 18.

Le bras long 13 du levier de renvoi 12 peut, bien sûr, être rendu directement solidaire de la barre de couplage 19 au moins en rotation alors que la troisième barre 11 indépendante du levier 12 (qui est alors supprimé) est rendue solidaire au moins en rotation de la barre de couplage 19.

**Revendication**

1. Dispositif d'actionnement manuel d'une tige de direction (15) agissant sur la roue directrice (18) d'un véhicule par l'intermédiaire de deux poignées (7, 25) mobiles en rotation dans un plan sensiblement vertical et reliées chacune à trois barres, la première barre (8, 24) de ces jeux formant avec chacune des poignées (7, 25) un levier (1, 2) articulé sur le véhicule, tandis que les troisièmes barres (11, 22) sont solidaires d'une part d'une barre de couplage (19) susceptible de tourner autour de son axe longitudinal, transversal à l'axe longitudinal du véhicule, et d'autre part d'un second élément constitué par un bras de renvoi (13) solidaire au moins en rotation de la barre de couplage précitée et relié à la tige de direction (15) et que les deuxièmes barres (10, 23) sont pour l'une (10), articulée de façon croisée avec les deux autres barres (8, 11) du jeu de barres correspondant et pour l'autre (23), articulée de façon non croisée avec les deux autres barres (22, 24) de l'autre jeu de barres, le bras de renvoi (13) et la troisième barre (11) de l'un des jeux de barres formant un levier (12) solidaire au moins en rotation de la barre de couplage rotatif (19), caractérisé en ce que le véhicule est un motocycle et en ce que chacune des poignées (7, 25) est fixée respectivement du côté droit et du côté gauche de la partie supérieure du bloc moteur-transmission (26) du motocycle pour former, avec les trois barres correspondantes (8, 10, 11; 24, 23, 22) deux blocs-leviers (27, 28) reliés par la barre de couplage (19) au-dessus du bloc moteur-transmission (26) et en ce que le bras de renvoi (13) est disposé sur le côté du bloc moteur-transmission (26) et est relié en partie basse à la tige de direction (15), de manière à laisser libre l'espace en avant du bloc moteur-transmission pour y loger un radiateur de refroidissement (29).

**Claim**

1. Manual actuating device of a steering rod (15) controlling the guiding wheel (18) of a vehicle through the intermediary of two handles (7, 25) that are movable in rotation in a substantially vertical plane and each of which is connected to a three-bar set, the first bar (8, 24) of this set forming with each of the handles (7, 25) a lever (1, 2) pivotally connected to the vehicle, while the third bars (11, 22) are integral with a connecting bar (19) adapted to rotate about its longitudinal axis, transversal to the longitudinal axis of the vehicle, and on the other hand with a second element constituted by a return arm (13) rigidly fixed, at least in rotation, to the above mentioned connecting bar and connected to the steering rod (15) and that one (10) of the second bars (10, 23), is pivotally connected in an intersecting manner with the two other bars (8, 11) of the set of corresponding bars and the other (23), is pivotally connected in a non-intersecting manner with the two other bars (22, 24) of the other set of bars, the return arm (13) and the third bar (11) of one of the sets of bars forming a lever (12) rigidly fixed, at least in rotation to the rotary connecting bar (19), characterized in that the vehicle is a motorcycle and each of the handles (7, 25) is attached respectively to the right side and to the left side of the upper part of the engine-transmission block (26) of the motorcycle in order to form, with the three corresponding bars (8, 10, 11; 24, 23, 22) two lever-block sets (27, 28) connected by the connecting bar (19) above the engine-transmission block (26) and in that the return arm (13) is disposed on the side of the engine-transmission block (26) and is connected at its lower part to the steering rod (15), so as to have a free space at the front of the engine-transmission block in order to allow to house therein a cooling radiator (29).

**Patentanspruch**

1. Handbetätigungsvorrichtung für eine auf das gelenkte Rad eines Fahrzeuges mittels zweier in einer im Wesentlichen vertikalen Ebene schwenkbarer Handgriffe (7, 25) wirkende Lenkstange (15), wobei jeder Handgriff mit je einem dreigliedrigen Stabwerk verbunden ist, dessen erstes Glied (8, 24) mit je einem der Handgriffe (7, 25) je einen am Fahrzeug gelagerten Lenkhebel (1, 2) bildet, während dessen dritte Glieder (11, 22) einerseits mit einer um ihre zur Fahrzeuglängsachse querliegenden Achse drehbaren Kuppelwelle (19) und andererseits mit einem zweiten Element fest verbunden sind, das aus einem mit der Kuppelwelle (19) zumindest auf drehfest verbundenen und mit der Lenkstange (15) verbundenen Wipparm (13) besteht, und während von den zweiten Gliedern (10, 23) das eine dem einen Stabwerk angehörige Glied (10) verschränkt mit den zwei anderen zugehörigen Gliedern (8, 11), und das dem anderen Stabwerk angehörende Glied (23) nicht verschränkt mit den zwei anderen zugehörigen Gliedern (22, 24) gelenkig verbunden ist, wobei der Wipparm (13) und das dritte Glied (11) einen mit der Kuppelwelle (19) zumindest auf Drehung fest verbundenen Wipphebel (12) bilden, dadurch gekennzeichnet, dass das Fahrzeug ein Motorrad ist, und dass jeder der Handgriffe (7, 25) an der linken bzw. rechten Oberseite des Motor-Getriebe-Blokkes (26) des Motorrades angebracht ist, um mit den zwei entsprechenden dreigliedrigen Stabwerken (8, 10, 11; 24, 23, 22) zwei durch die über dem Motor-Getriebe-Block (26) liegende Kuppelwelle (19) miteinander verbundene Hebelblöcke (27, 28) zu bilden, und dass der Wipparm (13) seitlich des Motor-Getriebe-Blockes (26) angeordnet und mit seinem unteren Teil mit der Lenkstange (15) verbunden ist, sodass vor dem Motor-Getriebe-Block Raum für einen Kühler freibleibt.